# FASCICULE DE BREVET EUROPEEN

(11) **EP 3 982 014 B1**
(45) Date de publication et mention de la délivrance du brevet: **05.04.2023**
(21) Numéro de dépôt: 21197315.1
(22) Date de dépôt: 17.09.2021
(51) Int. Cl.: F16J 15/02, B64D 47/00, F16L 5/06

(54) **JOINT D'ÉTANCHÉITÉ AVEC UNE JUPE**
DICHTUNGSFUGE MIT EINER SCHÜRZE
SEALING GASKET WITH A SKIRT

(30) Priorité: 07.10.2020 FR 2010254
(43) Date de publication de la demande: 13.04.2022
(73) Titulaire: AIRBUS OPERATIONS (S.A.S.), 31060 Toulouse (FR)
(72) Inventeur: MILLET, Gérard, 31060 TOULOUSE Cedex 9 (FR); DELPY, Vincent, 31060 TOULOUSE Cedex 9 (FR); FOUCART-GAUDY, Simon, 31060 TOULOUSE Cedex 9 (FR)
(74) Mandataire: Sarraméa, Claude

(56) Documents cités:
- CA-A- 1 031 383
- FR-A- 1 233 869
- FR-A- 1 322 980
- FR-A1- 2 227 468
- GB-A- 929 176
- JP-A- 2008 255 975
- US-A- 4 712 802
- US-B1- 6 736 081

## Description

### DOMAINE TECHNIQUE

La présente invention concerne un assemblage comportant un joint d'étanchéité, ainsi qu'un procédé d'assemblage d'un tel assemblage

### ÉTAT DE LA TECHNIQUE ANTÉRIEURE

Dans différentes installations, comme par exemple un aéronef, il arrive qu'une canalisation traverse une paroi séparant deux compartiments différents. Pour assurer l'étanchéité au niveau de cette traversée, plusieurs solutions sont connues telles que décrites dans les documents FR1322980A et FR2227468A1. US6736081 décrit un assemblage selon le préambule de la revendication 1.

Ces solutions qui donnent satisfaction sont généralement lourdes à mettre en oeuvre et nécessitent par exemple le sertissage d'éléments sur la paroi.

Il est donc nécessaire de trouver un joint d'étanchéité qui assure l'étanchéité autour de l'orifice traversant la paroi et qui est mis en oeuvre dans un assemblage simple.

### EXPOSÉ DE L'INVENTION

Un objet de la présente invention est de proposer un joint d'étanchéité qui présente une jupe venant en contact contre la paroi autour de l'orifice traversant ladite paroi.

A cet effet, est proposé un assemblage selon la revendication 1 à 8.

L'invention propose également un procédé d'assemblage d'un assemblage selon la variante précédente, ledit procédé consistant en :
- une étape de mise en place au cours de laquelle le raccord est disposé de manière à insérer la cheminée dans l'orifice de la paroi et à appliquer la platine contre la paroi,
- une étape de protection au cours de laquelle une lamelle souple est disposée autour du filetage de la cheminée,
- une étape d'enfoncement au cours de laquelle le joint d'étanchéité est enfoncé autour de la lamelle souple en présentant sa base en premier et vers la paroi, jusqu'à amener la base contre la paroi,
- une étape de retrait au cours de laquelle la lamelle souple est retirée, et
- une étape de serrage au cours de laquelle l'écrou est vissé et serré sur la cheminée.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en coupe et de côté d'un assemblage selon l'invention dans une position non serrée,
[Fig. 2] est une vue similaire à la Fig. 1 dans une position serrée,
[Fig. 3] est une vue similaire à la Fig. 1 lors d'une étape d'un procédé d'assemblage de l'assemblage selon l'invention,
[Fig. 4] est une vue en coupe du joint d'étanchéité selon une première variante de réalisation de l'invention,
[Fig. 5] est une vue en perspective du joint d'étanchéité selon une deuxième variante de réalisation de l'invention,
[Fig. 6] est une vue en perspective du joint d'étanchéité selon une troisième variante de réalisation de l'invention,
[Fig. 7] est une vue en coupe du joint d'étanchéité selon une quatrième variante de réalisation de l'invention, et
[Fig. 8] est une vue en perspective du joint d'étanchéité selon une cinquième variante de réalisation de l'invention.

### EXPOSÉ DÉTAILLÉ DE MODES DE RÉALISATION

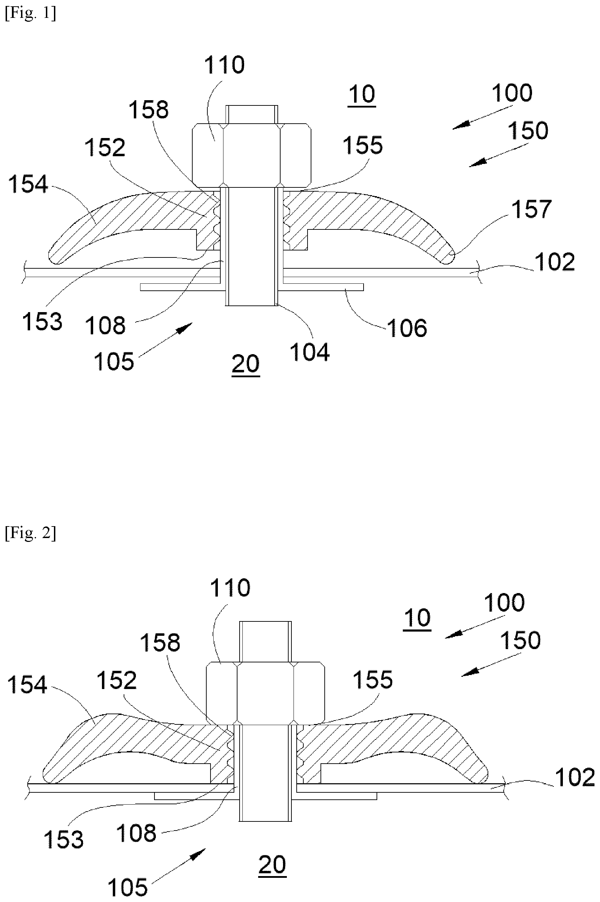

La Fig. 1 et la Fig. 2 montrent un assemblage 100 selon l'invention. L'assemblage 100 comporte une paroi 102 percée d'un orifice à travers lequel passe une canalisation 104. La paroi 102 sépare un espace en un premier volume 10 et un deuxième volume 20.

La canalisation 104 transporte un fluide qui peut être par exemple un liquide ou un gaz.

Pour éviter qu'une fuite d'un fluide d'un côté (ici le premier volume 10) de la paroi 102 s'écoule de l'autre côté (ici le deuxième volume 20) de la paroi 102 à travers son orifice, l'assemblage 100 comporte également un raccord 105 comportant une platine 106 et une cheminée 108 creuse dont la surface extérieure est filetée.

La platine 106 est percée d'un trou et la cheminée 108 est solidaire de la platine 106 et fixée autour dudit trou.

Le raccord 105 est disposé de manière à appliquer la platine 106 contre la paroi 102 du côté du deuxième volume 20 tandis que la cheminée 108 est insérée dans l'orifice de la paroi 102 autour de la canalisation 104, ainsi la canalisation 104 traverse la cheminée 108.

Bien sûr, pour limiter les passages de fluides entre le premier volume 10 et le deuxième volume 20, les dimensions de l'orifice, de la cheminée 108, de la canalisation 104 et du trou sont adaptées pour laisser le moins d'espace possible entre eux tout en autorisant le montage et le démontage de l'assemblage 100.

L'assemblage 100 comporte également un joint d'étanchéité 150 réalisé dans un matériau souple tel que du silicone par exemple.

Le joint d'étanchéité 150 comporte un fût 152 qui s'étend entre une base 153 et un sommet 155. Le fût 152 est traversé par un évidement cylindrique entre sa base 153 et son sommet 155, l'évidement permet l'enfoncement du fût 152 autour de la cheminée 108 en présentant la base 153 vers la paroi 102. Pour assurer l'étanchéité entre la cheminée 108 et le fût 152, le diamètre du fût 152 est inférieur au diamètre de la cheminée 108. La différence de diamètre doit être suffisante pour assurer l'étanchéité mais ne doit pas être trop importante pour empêcher la pénétration de la cheminée 108 dans l'évidement. Du fait de la nature souple du joint d'étanchéité 150, une légère expansion de l'évidement est possible lors de la mise en place.

Le joint d'étanchéité 150 comporte également une jupe 154 solidaire du fût 152 et s'étendant autour dudit fût 152. La jupe 154 prend la forme d'un dôme dont les bords extérieurs 157 sont orientés vers la paroi 102 et s'étendent au-delà de la base 153 du fût 152 en partant du sommet 155. En d'autres termes, dans la position de la Fig. 1, lorsque la jupe 154 n'est soumise à aucun effort, il y a une différence de hauteur entre la base 153 et les bords extérieurs 157, et les bords extérieurs 157 descendent plus bas que la base 153.

Dans le mode de réalisation des Fig. 1 à 3, la jupe 154 est solidaire du fût 152 au niveau de son sommet 155.

L'assemblage 100 comporte également un écrou 110 qui se visse sur la cheminée 108 en laissant passer la canalisation 104 à travers lui. L'écrou 110 prend le fût 152 en sandwich entre la paroi 102 et l'écrou 110.

La Fig. 1 montre l'assemblage 100 lorsque l'écrou 110 n'est pas serré et la Fig. 2 montre l'assemblage 100 lorsque l'écrou 110 est serré.

Lorsque l'écrou 110 est vissé, le joint d'étanchéité 150 descend le long de la cheminée 108. Du fait de la différence de hauteur entre les bords extérieurs 157 et la base 153, les bords extérieurs 157 entrent en premier en contact avec la paroi 102 et le serrage est poursuivi jusqu'à ce que la base 153 du fût 152 entre en contact contre la paroi 102.

Après serrage, les bords extérieurs 157 sont appuyés contre la paroi 102 assurant ainsi une étanchéité autour de la cheminée 108 et de l'orifice de la paroi 102 du fait de la tension induite dans la jupe 154 par le contact avec la paroi 102. Les bords extérieurs 157 présentent une forme en goutte pour limiter le risque de fuite par capillarité.

L'assemblage 100 est donc relativement simple à réaliser et à mettre en oeuvre. En outre, si un écoulement d'un fluide intervient dans le premier volume 10, ce fluide va s'écouler le long de la jupe 154 pour rejoindre la paroi 102 sans s'écouler dans l'orifice de ladite paroi 102. Le joint d'étanchéité 150 permet de détourner le fluide et maintenir l'espace sous la jupe 154 étanche.

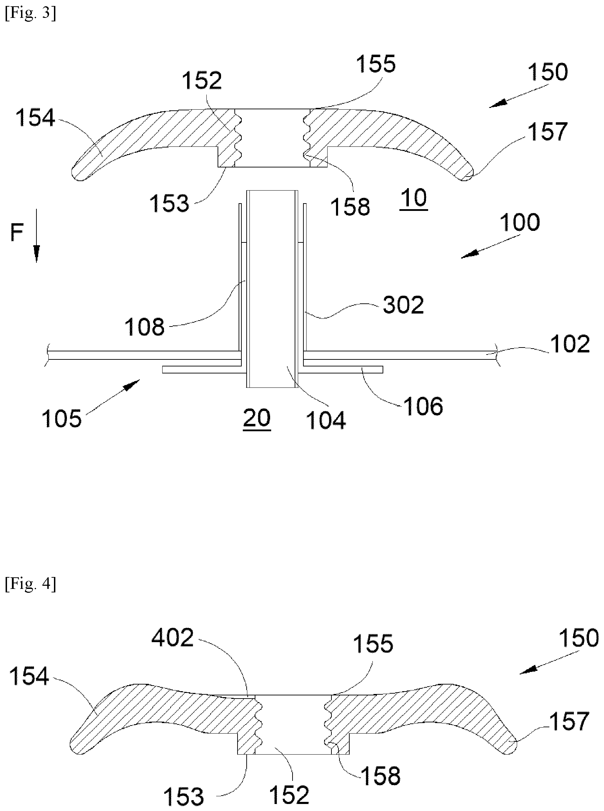

Un procédé d'assemblage de l'assemblage 100 consiste en :
- une étape de mise en place au cours de laquelle le raccord 105 est disposé de manière à insérer la cheminée 108 dans l'orifice de la paroi 102 et à appliquer la platine 106 contre la paroi 102, c'est-à-dire à introduire la cheminée 108 depuis le deuxième volume 20 dans l'orifice de la paroi 102,
- une étape de protection, qui est représentée à la Fig. 3, au cours de laquelle une lamelle souple 302, telle qu'un clinquant métallique, est disposée autour du filetage de la cheminée 108,
- une étape d'enfoncement (flèche F) au cours de laquelle le joint d'étanchéité 150 est enfoncé autour de la lamelle souple 302 en présentant sa base 153 en premier et vers la paroi 102, jusqu'à amener la base 153 contre la paroi 102,
- une étape de retrait au cours de laquelle la lamelle souple 302 est retirée, et
- une étape de serrage au cours de laquelle l'écrou 110 est vissé et serré sur la cheminée 108.

Un tel procédé d'assemblage permet entre autres de protéger le filetage lors de la mise en place du joint d'étanchéité 150.

Pour améliorer la tension d'étanchéité du fût 152 autour de la cheminée 108, l'intérieur du fût 152 présente une succession de boudins toriques 158 qui tapissent l'intérieur de l'évidement cylindrique. L'axe de chaque boudin torique 158 est coaxial avec l'axe de l'évidement et du filetage de la cheminée 108.

Les Figs. 4 à 8 montrent différentes variantes qui sont présentées ici individuellement sur chaque Fig., mais qui peuvent être combinées les unes avec les autres.

Sur la Fig. 4, le joint d'étanchéité 150 présente dans le sommet 155 du fût 152, une gorge 402 s'étendant radialement et débouchant dans l'évidement. Ainsi, en cas de fuite sous l'écrou 110, le fluide peut être évacué par la gorge 402.

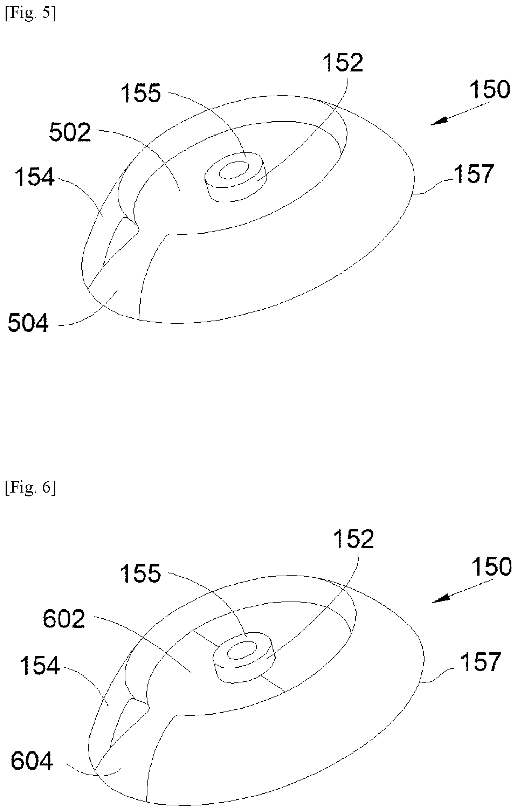

Sur la Fig. 5, la jupe 154 est fixée à distance de la base 153 et du sommet 155 et présente un enfoncement 502 autour du fût 152 pour servir de réservoir en cas de besoin, et une pente 504 qui s'étend depuis l'enfoncement 502 jusqu'aux bords extérieurs 157 pour guider le fluide contenu dans le réservoir vers un endroit dédié.

Sur la Fig. 6, la jupe 154 est fixée à distance de la base 153 et du sommet 155 et présente un enfoncement 602 autour du fût 152 pour servir de réservoir en cas de besoin, et une pente 604 qui s'étend depuis l'enfoncement 602 jusqu'aux bords extérieurs 157 pour guider le fluide contenu dans le réservoir vers un endroit dédié. L'enfoncement 602 présente en outre, un fond en pente vers la pente 604 sur au moins une partie de son fond pour une évacuation plus rapide du fluide contenu dans le réservoir. Dans le mode de réalisation de la Fig. 6, le fond en pente est présent sur la moitié de l'enfoncement 602.

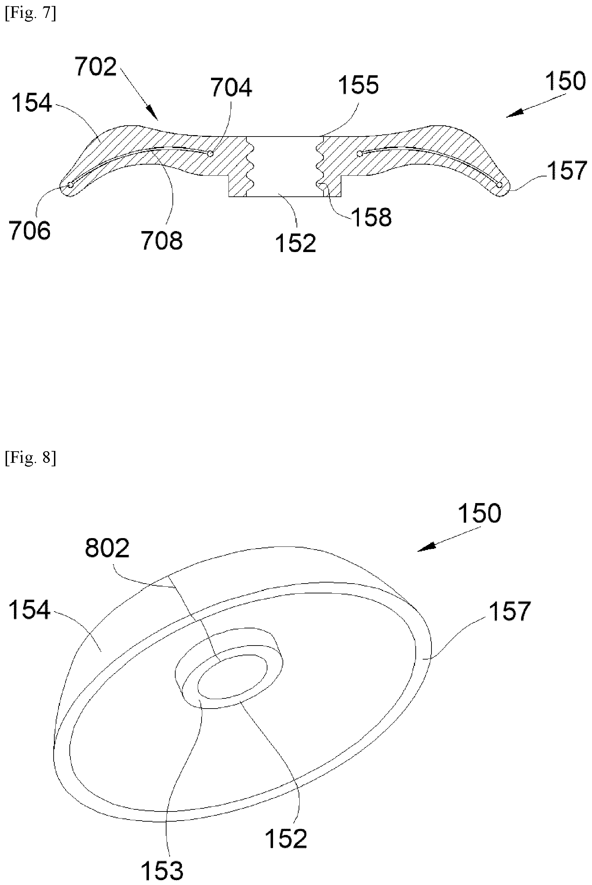

Sur la Fig. 7, le joint d'étanchéité 150 présente un treillis 702, en particulier en métal, qui est noyé à l'intérieur du joint d'étanchéité 150, par exemple par surmoulage, pour renforcer la structure et la force de placage contre la paroi 102. Dans le mode de réalisation de l'invention présenté sur la Fig. 7, le treillis 702 comporte une petite couronne 704 qui entoure le fût 152, une grande couronne 706 qui suit les bords extérieurs 157 et une pluralité de tiges 708 fixées entre la petite couronne 704 et la grande couronne 706. Les tiges 708 sont arquées pour suivre la courbure de la jupe 154.

Sur la Fig. 8, le joint d'étanchéité 150 est fendu radialement à partir des bords extérieurs 157 jusqu'à l'évidement du fût 152 pour faciliter la mise en place sans avoir à démonter l'assemblage 100. La fente 802 s'étend uniquement sur un rayon.

Pour assurer le maintien du joint, un collier de serrage peut être mis en place autour du fût 152 sous la jupe 154, en particulier par retournement de la jupe 154.

## Revendications

1. Assemblage (100) comportant :
- une paroi (102) percée d'un orifice,
- un raccord (105) comportant une platine (106) percée d'un trou et une cheminée (108) fixée à la platine (106) autour dudit trou et dont la surface extérieure est filetée, où le raccord (105) est disposé de manière à appliquer la platine (106) contre la paroi (102) tandis que la cheminée (108) est insérée dans l'orifice de la paroi (102),
- une canalisation (104) traversant la cheminée (108),
- un joint d'étanchéité (150),
- et un écrou (110),
l'assemblage (100) étant caractérisé en ce le joint d'étanchéité (150) comporte un fût (152) s'étendant entre une base (153) et un sommet (155), où le fût (152) est traversé par un évidement cylindrique entre sa base (153) et son sommet (155), et une jupe (154) solidaire du fût (152) et s'étendant autour dudit fût (152), où la jupe (154) prend la forme d'un dôme dont les bords extérieurs (157) s'étendent au-delà de la base (153) en partant du sommet (155),
où le fût (152) est enfoncé sur la cheminée (108) en présentant sa base (153) face à la paroi (102), et
où l'écrou (110) est vissé sur la cheminée (108) en prenant le fût (152) en sandwich entre la paroi (102) et l'écrou (110).

2. Assemblage (100) selon la revendication 1, **caractérisé en ce que** l'intérieur du fût (152) présente une succession de boudins toriques (158) qui tapissent l'intérieur de l'évidement cylindrique.

3. Assemblage (100) selon l'une des revendications 1 ou 2, **caractérisé en ce que** le joint d'étanchéité (150) présente dans le sommet (155) du fût (152), une gorge (402) s'étendant radialement et débouchant dans l'évidement.

4. Assemblage (100) selon l'une des revendications 1 à 3, **caractérisé en ce que** la jupe (154) est fixée à distance de la base (153) et du sommet (155) et présente un enfoncement (502) autour du fût (152) et une pente (504) qui s'étend depuis l'enfoncement (502) jusqu'aux bords extérieurs (157).

5. Assemblage (100) selon l'une des revendications 1 à 4, **caractérisé en ce que** la jupe (154) est fixée à distance de la base (153) et du sommet (155) et présente un enfoncement (602) autour du fût (152), une pente (604) qui s'étend depuis l'enfoncement (602) jusqu'aux bords extérieurs (157), et **en ce que** l'enfoncement (602) présente un fond en pente vers la pente (604) sur au moins une partie de son fond.

6. Assemblage (100) selon l'une des revendications 1 à 5, **caractérisé en ce qu'**il comporte un treillis (702) qui est noyé à l'intérieur du joint d'étanchéité (150).

7. Assemblage (100) selon la revendication 6, **caractérisé en ce que** le treillis (702) comporte une petite couronne (704) qui entoure le fût (152), une grande couronne (706) qui suit les bords extérieurs (157) et une pluralité de tiges (708) fixées entre la petite couronne (704) et la grande couronne (706).

8. Assemblage (100) selon l'une des revendications 1 à 7, **caractérisé en ce que** le joint d'étanchéité (150) est fendu radialement à partir des bords extérieurs (157) jusqu'à l'évidement du fût (152).

9. Procédé d'assemblage d'un assemblage selon l'une quelconque des revendications précédentes, ledit procédé consistant en :
- une étape de mise en place au cours de laquelle le raccord (105) est disposé de manière à insérer la cheminée (108) dans l'orifice de la paroi (102) et à appliquer la platine (106) contre la paroi (102),
- une étape de protection au cours de laquelle une lamelle souple (302) est disposée autour du filetage de la cheminée (108),
- une étape d'enfoncement au cours de laquelle le joint d'étanchéité (150) est enfoncé autour de la lamelle souple (302) en présentant sa base (153) en premier et vers la paroi (102), jusqu'à amener la base (153) contre la paroi (102),
- une étape de retrait au cours de laquelle la lamelle souple (302) est retirée, et
- une étape de serrage au cours de laquelle l'écrou (110) est vissé et serré sur la cheminée (108).

## Patentansprüche

1. Anordnung (100), welche umfasst:
- eine Wand (102), die von einer Öffnung durchbohrt ist,
- ein Anschlussstück (105), das eine von einem Loch durchbohrte Platte (106) und einen Kanal (108), der an der Platte (106) um das Rohr herum befestigt ist und dessen Außenfläche mit einem Gewinde versehen ist, umfasst, wobei das Anschlussstück (105) so angeordnet ist, dass die Platte (106) an die Wand (102) angedrückt wird, während der Kanal (108) in die Öffnung der Wand (102) eingesetzt ist,
- eine Rohrleitung (104), die den Kanal (108) durchquert,
- eine Dichtung (150)
- und eine Mutter (110),
wobei die Anordnung (100) **dadurch gekennzeichnet ist, dass** die Dichtung (150) einen Schaft (152), der sich zwischen einer Basis (153) und einem Scheitel (155) erstreckt, wobei der Schaft (152) von einer zylindrischen Aussparung zwischen seiner Basis (153) und seinem Scheitel (155) durchquert wird, und eine Schürze (154),
die mit dem Schaft (152) fest verbunden ist und sich um den Schaft (152) herum erstreckt, umfasst,
wobei die Schürze (154) die Form einer Kuppel annimmt, deren Außenränder (157) sich über die Basis (153) hinaus erstrecken, wobei sie vom Scheitel (155) ausgehen, wobei der Schaft (152) so auf den Kanal (108) aufgepresst ist, dass seine Basis (153) der Wand (102) zugewandt ist, und
wobei die Mutter (110) so auf den Kanal (108) aufgeschraubt ist, dass der Schaft (152) sandwichartig zwischen der Wand (102) und der Mutter (110) eingeschlossen ist.

2. Anordnung (100) nach Anspruch 1, **dadurch gekennzeichnet, dass** das Innere des Schaftes (152) eine Aufeinanderfolge von torusförmigen Wülsten (158) aufweist, welche das Innere der zylindrischen Aussparung bedecken.

3. Anordnung (100) nach einem der Ansprüche 1 oder 2, **dadurch gekennzeichnet, dass** die Dichtung (150) im Scheitel (155) des Schaftes (152) eine Auskehlung (402) aufweist, die sich radial erstreckt und in die Aussparung mündet.

4. Anordnung (100) nach einem der Ansprüche 1 bis 3, **dadurch gekennzeichnet, dass** die Schürze (154) in einem Abstand von der Basis (153) und vom Scheitel (155) befestigt ist und eine Vertiefung (502) um den Schaft (152) herum und eine Schräge (504), welche sich von der Vertiefung (502) bis zu den Außenrändern (157) erstreckt, aufweist.

5. Anordnung (100) nach einem der Ansprüche 1 bis 4, **dadurch gekennzeichnet, dass** die Schürze (154) in einem Abstand von der Basis (153) und vom Scheitel (155) befestigt ist und eine Vertiefung (602) um den Schaft (152) herum und eine Schräge (604), welche sich von der Vertiefung (602) bis zu den Außenrändern (157) erstreckt, aufweist, und dadurch, dass die Vertiefung (602) einen Boden aufweist, der auf wenigstens einem Teil seiner Fläche zu der Schräge (604) hin geneigt ist.

6. Anordnung (100) nach einem der Ansprüche 1 bis 5, **dadurch gekennzeichnet, dass** sie ein Geflecht (702) umfasst, das ins Innere der Dichtung (150) eingebettet ist.

7. Anordnung (100) nach Anspruch 6, **dadurch gekennzeichnet, dass** das Geflecht (702) einen kleinen Kranz (704), welcher den Schaft (152) umgibt, einen großen Kranz (706), welcher den Außenrändern (157) folgt, und mehrere Stäbe (708), die zwischen dem kleinen Kranz (704) und dem großen Kranz (706) befestigt sind, umfasst.

8. Anordnung (100) nach einem der Ansprüche 1 bis 7, **dadurch gekennzeichnet, dass** die Dichtung (150) von den Außenrändern (157) aus bis zur Aussparung des Schaftes (152) radial geschlitzt ist.

9. Verfahren zum Zusammenbau einer Anordnung nach einem der vorhergehenden Ansprüche, wobei das Verfahren umfasst:
- einen Schritt der Anbringung, in welchem das Anschlussstück (105) so angeordnet wird, dass der Kanal (108) in die Öffnung der Wand (102) eingesetzt wird und die Platte (106) an die Wand (102) angedrückt wird,
- einen Schritt des Schutzes, in welchem eine flexible Lamelle (302) um das Gewinde des Kanals (108) herum angeordnet wird,
- einen Schritt des Eindrückens, in welchem die Dichtung (150) um die flexible Lamelle (302) herum eingedrückt wird, mit ihrer Basis (153) voran und in Richtung der Wand (102), bis die Basis (153) an der Wand (102) zur Anlage gebracht wird,
- einen Schritt des Zurückziehens, in welchem die flexible Lamelle (302) zurückgezogen wird, und
- einen Schritt des Festziehens, in welchem die Mutter (110) auf den Kanal (108) geschraubt und festgezogen wird.

## Claims

1. Assembly (100) comprising:
- a wall (102) pierced with an orifice,
- a connector (105) comprising a plate (106) pierced with a hole and a bushing (108) fixed to the plate (106) around said hole and the exterior surface of which is threaded, in which the connector (105) is arranged in such a way as to press the plate (106) against the wall (102) while the bushing (108) is inserted into the orifice in the wall (102),
- a pipe (104) passing through the bushing (108),
- a seal (150), and
- a nut (110),
the assembly (100) being **characterized in that** the seal (150) comprises a barrel (152) extending between a base (153) and a top (155), in which the barrel (152) has a cylindrical cavity passing through it between its base (153) and its top (155), and a skirt (154) indissociable from the barrel (152) and extending around said barrel (152), in which the skirt (154) adopts the shape of a dome of which the exterior edges (157) extend out beyond the base (153) starting from the top (155),
in which the barrel (152) is pressed home onto the bushing (108), with its base (153) facing towards the wall (102), and
in which the nut (110) is screwed onto the bushing (108), sandwiching the barrel (152) between the wall (102) and the nut (110).

2. Assembly (100) according to Claim 1, **characterized in that** the inside of the barrel (152) exhibits a succession of toric bulges (158) which line the interior of the cylindrical cavity.

3. Assembly (100) according to one of Claims 1 and 2, **characterized in that** the seal (150) has, in the top (155) of the barrel (152), a groove (402) extending radially and opening into the cavity.

4. Assembly (100) according to one of Claims 1 to 3, **characterized in that** the skirt (154) is attached some distance from the base (153) and from the top (155) and exhibits a depression (502) around the barrel (152) and a slope (504) which extends from the depression (502) as far as the exterior edges (157).

5. Assembly (100) according to one of Claims 1 to 4, **characterized in that** the skirt (154) is attached some distance from the base (153) and from the top (155) and exhibits a depression (602) around the barrel (152), a slope (604) which extends from the depression (602) as far as the exterior edges (157), and **in that** the depression (602) has a bottom that slopes towards the slope (604) over at least part of its bottom.

6. Assembly (100) according to one of Claims 1 to 5, **characterized in that** it comprises a lattice (702) which is embedded inside the seal (150).

7. Assembly (100) according to Claim 6, **characterized in that** the lattice (702) comprises a small ring (704) which surrounds the barrel (152), a large ring (706) which follows the exterior edges (157) and a plurality of rods (708) fixed between the small ring (704) and the large ring (706).

8. Assembly (100) according to one of Claims 1 to 7, **characterized in that** the seal (150) is slotted radially from the exterior edges (157) as far as the cavity of the barrel (152).

9. Method for assembling an assembly according to any one of the preceding claims, said method consisting of:
- a positioning step during which the connector (105) is arranged in such a way as to insert the bushing (108) into the orifice in the wall (102) and press the plate (106) against the wall (102),
- a protecting step during which a flexible sheet (302) is arranged around the screw thread of the bushing (108),
- a pressing-home step during which the seal (150) is pressed home around the flexible sheet (302), base (153) first and towards the wall (102), until the base (153) is against the wall (102),
- a removal step during which the flexible sheet (302) is removed, and
- a tightening step during which the nut (110) is screwed and tightened onto the bushing (108).
